# EUROPÄISCHE PATENTANMELDUNG

(11) **EP 4 596 452 A2**
(43) Veröffentlichungstag der Anmeldung: **06.08.2025**
(21) Anmeldenummer: 25176712.5
(22) Anmeldetag: 16.01.2023
(51) Int. Cl.: B65D 85/804

(54) **PORTIONSKAPSEL ZUR ZUBEREITUNG EINES GETRÄNKS MIT HILFE EINER GETRÄNKEZUBEREITUNGSMASCHINE, GETRÄNKEZUBEREITUNGSSYSTEM UND VERFAHREN ZUR HERSTELLUNG EINER PORTIONSKAPSEL**

(30) Priorität: 11.02.2022 DE 102022201481
(62) Teilanmeldung aus: 23701020.2
(71) Anmelder: K-fee System GmbH, 51469 Bergisch Gladbach (DE)
(72) Erfinder: EMPL, Günter, 51429 Bergisch Gladbach (DE); KRÜGER, Marc, 51467 Bergisch Gladbach (DE)
(74) Vertreter: Kutzenberger Wolff & Partner

(57) **Zusammenfassung**

Es wird eine Portionskapsel zur Zubereitung eines Getränks mit Hilfe einer Getränkezubereitungsmaschine vorgeschlagen, wobei die Portionskapsel ein Basiselement mit einem Hohlraum zum Aufnehmen eines Getränkerohmaterials und ein den Hohlraum verschließendes Deckelelement aufweist, wobei das Basiselement einen Bodenbereich, einen umlaufenden Flansch an dem dem Bodenbereich gegenüberliegenden Ende und eine sich von dem Bodenbereich zum umlaufenden Flansch erstreckende Kapselwandung umfasst, wobei die Portionskapsel einen optisch detektierbaren Identifikationscode, insbesondere einen Bit- und/oder Barcode, aufweist, wobei entweder der optisch detektierbare Identifikationscode auf der dem Bodenbereich zugewandten Seite des Flansches angeordnet ist, oder das Deckelelement an dem Flansch befestigt ist.

## Beschreibung

### Stand der Technik

Die vorliegende Erfindung geht aus von einer Portionskapsel zur Zubereitung eines Getränks mit einer Getränkezubereitungsmaschine, wobei die Portionskapsel ein Basiselement mit einem Hohlraum zum Aufnehmen eines Getränkerohmaterials und ein den Hohlraum verschließendes Deckelelement aufweist, wobei das Basiselement einen Bodenbereich, einen umlaufenden Flansch an dem dem Bodenbereich gegenüberliegenden Ende und eine sich von dem Bodenbereich zum umlaufenden Flansch erstreckende Kapselwandung umfasst, wobei die Portionskapsel einen optisch detektierbaren Identifikationscode, insbesondere einen Bit- und/oder Barcode, aufweist.

Solche Portionskapseln sind aus dem Stand der Technik bekannt. Beispielsweise offenbart die Druckschrift WO 2016/186488 A1 eine solche gattungsgemäße Portionskapsel. Diese Portionskapsel ist dazu vorgesehen, in eine Brühkammer eingelegt zu werden, in welcher die Portionskapsel perforiert wird, um Flüssigkeit in Form heißen Wassers unter Druck in den Hohlraum einzuleiten. Durch Wechselwirkung zwischen dem eingeleiteten Wasser mit dem Getränkerohmaterial, insbesondere geröstetem und gemahlenem Kaffee, entsteht ein Getränk, welches die Portionskapsel durch weitere Perforationsstellen verlässt und in ein Gefäß gelangt.

Für jede Portionskapsel existiert in der Regel eine passende Getränkezubereitungsmaschine, welche zur Zubereitung von Getränken auf Grundlage der passenden Portionskapseln optimiert ist. Zur Vermeidung von Fehlfunktionen hat es sich bewährt, derartige Portionskapsel mit maschinell und optisch auslesbaren detektierbaren Identifikationscodes zu versehen, damit vor dem Beginn des Brühprozesses eine Prüfung stattfinden kann, ob die eingelegte Portionskapsel mit der Maschine kompatibel ist. Zudem kann ggf. ein passendes Brühprogramm für das in der Portionskapsel befindliche Getränkerohmaterial gestartet werden.

Aus den Druckschriften EP 3023362 B1, WO2020/201487 A1 und US 10,800,600 B2 ist bekannt, solche optische detektierbaren Merkmale in Form von Barcodes oder Binärcodes auf den Flansch der Kapsel aufzudrucken.

Bei den bekannten Portionskapseln wird während der Herstellung das Deckelelement mit dem Flansch stoffschlüssig verbunden, insbesondere gesiegelt. Dadurch kann es jedoch zu einer strukturellen Beeinträchtigung des Flansches kommen. Dadurch wird wahlweise ein bereits aufgebrachter Identifikationscode beschädigt, oder eine nachfolgende Aufbringung des Identifikationscodes erschwert.

### Offenbarung der Erfindung

Es ist eine Aufgabe der vorliegenden Erfindung eine Portionskapsel mit einem optisch detektierbaren Identifikationscode bereitzustellen, welche eine Verbesserung gegenüber den aus dem zitierten Stand der Technik bekannten Lösungen darstellt. Insbesondere soll der Identifikationscode während der Herstellung der Portionskapsel fehlerfrei und einfach auf die Portionskapsel aufzubringen sein. Zudem ist es wünschenswert, die bekannten Portionskapseln derart weiterzubilden, dass das Auslesen des Identifikationscodes in der Getränkezubereitungsmaschine zuverlässiger erfolgt.

Die Aufgabe der vorliegenden Erfindung wird gelöst mit einer Portionskapsel nach Anspruch 1.

Vorteilhafte Ausgestaltungen und Weiterbildungen der Erfindung sind den Unteransprüchen, sowie der folgenden Beschreibung unter Bezugnahme auf die Zeichnungen entnehmbar.

Die zu diesem Gegenstand der vorliegenden Erfindung erläuterten Vorteile und die zugehörigen Ausführungsformen gelten entsprechend auch für die anderen Gegenstände der vorliegenden Erfindung und umgekehrt.

Es wird eine Portionskapsel zur Zubereitung eines Getränks mit einer Getränkezubereitungsmaschine vorgeschlagen, wobei die Portionskapsel ein Basiselement mit einem Hohlraum zum Aufnehmen eines Getränkerohmaterials und ein den Hohlraum verschließendes Deckelelement aufweist, wobei das Basiselement einen Bodenbereich, einen umlaufenden Flansch an dem dem Bodenbereich gegenüberliegenden Ende und eine sich von dem Bodenbereich zum umlaufenden Flansch erstreckende Kapselwandung umfasst, wobei die Portionskapsel einen optisch detektierbaren Identifikationscode, insbesondere einen Bit- und/oder Barcode, aufweist.

Die erfindungsgemäße Portionskapsel ist nun derart vorgesehen, dass entweder der optisch detektierbare Identifikationscode auf der dem Bodenbereich zugewandten Seite des Flansches angeordnet ist, oder dass das Deckelelement an dem Flansch befestigt ist.

Die erfindungsmäße Portionskapsel hat gegenüber den aus dem Stand der Technik bekannten Portionskapseln den Vorteil, dass der Identifikationscode nicht an dem Flansch vorgesehen ist, wenn das Deckelelement an diesem befestigt ist. Hierdurch wird eine mögliche Fehlerquelle bei der Herstellung und/oder der Verwendung der Kapsel ausgeschlossen. Insbesondere kann der Identifikationscode an dem Flansch vorgesehen sein, dann ist jedoch das Deckelelement in anderer Weise mit dem Basiselement verbunden, oder das Deckelelement ist an dem Flansch befestigt, dann ist jedoch der Identifikationscode an einem anderen Element als dem Flansch vorgesehen.

Vorzugsweise ist der Identifikationscode dabei stets auf einer dem Bodenbereich zugewandten Seite vorgesehen. Diese Position wird im Rahmen der vorliegenden Erfindung auch als Flanschunterseite bzw. Unterseite bezeichnet. Dies bezieht sich auf eine Orientierung der Portionskapsel, die mit dem Bodenbereich auf einer Oberfläche ruht und das Deckelelement in einer horizontalen Ebene ausgerichtet ist. Selbstverständlich kann die Portionskapsel beispielsweise flach mit dem Deckelelement auf der Oberfläche ruhen, in diesem Fall gelten die Bezeichnungen dann entsprechend.

Vorzugsweise ist der optisch detektierbare Identifikationscode aufgedruckt oder eingebracht. Besonders bevorzugt ist das Deckelelement mit dem Basiselement, insbesondere dem Flansch, stoffschlüssig verbunden, beispielsweise geklebt oder gesiegelt.

Gemäß einer bevorzugten Ausführungsform der vorliegenden Erfindung ist vorgesehen, dass das Deckelelement an der Kapselwandung, insbesondere an der Innenseite der Kapselwandung, befestigt ist. Das Deckelelement kann beispielsweise über eine Sonotrode etwas in den Hohlraum hineingeführt und dort seitlich mit der Kapselwandung stoffschlüssig verbunden werden. Besonders bevorzugt ist das Deckelelement von innen mit der Kapselwandung verbunden. Alternativ oder zusätzlich ist das Deckelelement von außen mit der Kapselwandung verbunden. Beispielsweise kann ein Ansiegeln mit gleichzeitigem Andrücken von außen und/oder innen erfolgen. Ganz besonders bevorzugt ist ein Befestigungsbereich dabei oberhalb und/oder unterhalb einer Haupterstreckungsebene des Deckelelements vorgesehen. Noch mehr bevorzugt ist die Haupterstreckungsebene des Deckelelements bündig mit der Haupterstreckungsebene des Flansches ausgerichtet. Hierdurch ist es in vorteilhafter Weise möglich, dass das Deckelelement nicht an dem Flansch befestigt wird, so dass an diesem wiederum der Identifikationscode angebracht werden kann, insbesondere an der Flanschunterseite, ohne dass während der Herstellung der Portionskapsel und/oder der Verwendung in einer Getränkezubereitungsmaschine zu Beschädigungen des Identifikationscodes oder einer fehlerhaften Detektion kommen kann. Eine Befestigung an der Innenseite der Kapselwandung, wobei der Befestigungsbereich unterhalb der Haupterstreckungsebene angeordnet ist, wobei Deckelelement und Flansch bündig sind ist dabei besonders vorteilhaft, da in diesem Fall ausgeschlossen wird, dass während der Verwendung der Portionskapsel kein Aufstechen des Deckelelements erfolgt, da die Aufstechmittel der Getränkezubereitungsmaschine nicht weit genug in die Portionskapsel hineinreichen.

Gemäß einer bevorzugten Ausführungsform der vorliegenden Erfindung ist vorgesehen, dass das Deckelelement eine elastische Deckelfolie ist und/oder einen Materialspeicher aufweist, wobei das Deckelelement derart ausgebildet ist, dass es sich durch ein Ausgasen des Getränkerohmaterials nach außen wölbt. Ein Materialspeicher meint hierbei insbesondere, dass in dem befestigten Zustand das Deckelelement nicht unter Spannung steht, sondern sich unter dem Druck des im Hohlraum der Portionskapsel entstehenden Gases, beispielsweise Kohlenstoffdioxid bei geröstetem Kaffee als Getränkerohmaterial, nach außen wölben kann. Der Fachmann versteht, dass in diesem Fall das Deckelelement eine vorbestimmte Zeit nach dem Abschließen des das Getränkerohmaterial enthaltenden Hohlraums im Querschnitt konvex geformt ist. Hierdurch ist es in besonders vorteilhafter Weise möglich, dass eine technisch einfachere Befestigung an der Kapselinnenwand, also der Innenseite der Kapselwandung, erfolgt, wobei ein Befestigungsbereich über der Haupterstreckungsebene des Deckelelements angeordnet ist, aber durch das Auswölben des Deckelelements dieses dennoch wenigstens in einem zentralen Aufstechbereich, vorzugsweise auch in einem äußeren, peripheren Aufstechbereich, wenigstens annähernd auf der Ebene des Flansches liegt und somit ein sicheres Aufstechen gewährleistet wird.

Gemäß einer bevorzugten Ausführungsform der vorliegenden Erfindung oder gemäß einem weiteren Gegenstand der vorliegenden Erfindung ist vorgesehen, dass das Deckelelement ein, insbesondere umlaufendes, Ringelement umfasst. Das Deckelelement kann einstückig oder mehrstückig vorgesehen sein. Vorzugsweise ist das Ringelement separat von dem übrigen Deckelelement, beispielsweise einer Deckelfolie, vorgesehen und wird damit form-, kraft- und/oder stoffschlüssig verbunden. Alternativ ist das Ringelement als eine lokale und umlaufende Verdickung, insbesondere in einem konstanten Radius um eine Zentralachse der Portionskapsel, ausgebildet. Besonders bevorzugt ist das Ringelement an einem radial äußeren Ende des Deckelelements angeordnet. Alternativ erstreckt sich das Deckelelement noch um eine vorbestimmte Strecke radial außerhalb des Ringelements. Ganz besonders bevorzugt ist das Ringelement in einem Befestigungsbereich mit dem Basiselement, insbesondere dem Flansch, verbunden. Vorzugsweise ist das Ringelement an dem Flansch befestigt. Noch mehr bevorzugt ist das Ringelement wenigstens in dem Befestigungsbereich aus einem wenigstens teilweise unterschiedlichen Material als das übrige Deckelelement gefertigt. Inbesondere ist das Ringelement wenigstens in dem Befestigungsbereich weicher und/oder verformbarer. Hierdurch ist es in besonders vorteilhafter Weise möglich, dass das Deckelelement indirekt über das Ringelement an einer üblichen Position an dem Flansch befestigbar ist, aber durch die Form und/oder die Materialeigenschaften des Ringelements eine Beschädigung und/oder Beeinträchtigung des Identifikationscodes vermieden wird.

Gemäß einer bevorzugten Ausführungsform der vorliegenden Erfindung ist vorgesehen, dass der optisch detektierbare Identifikationscode an dem Ringelement angeordnet ist. Besonders bevorzugt ist das Deckelelement radial innerhalb des Ringeelements an dem Flansch befestigt. Ganz besonders bevorzugt ist der Flansch in diesem Fall kürzer ausgebildet, d.h. mit einer geringeren Breite in radialer Richtung, so dass der Identifikationscode an einer geeigneten Stelle zur Detektion in der Getränkezubereitungsmaschine angeordnet ist. Hierdurch ist es in vorteilhafter Weise möglich, das Deckelelement in gewohnter Weise an dem Flansch zu befestigen, ohne dass der nun an dem Ringelement angeordnete Identifikationscode beeinträchtigt wird. Das Ringelement kann einen beliebigen, geeigneten Querschnitt aufweisen, beispielsweise einen rechteckigen, quadratischen, runden oder elliptischen Querschnitt.

Gemäß einer bevorzugten Ausführungsform der vorliegenden Erfindung ist vorgesehen, dass das Deckelelement über den Flansch hinausragt. Vorzugsweise ist der Identifikationscode an dem Deckelelement vorgesehen. Hierdurch ist es in vorteilhafter Weise möglich, dass der Identifikationscode an dem Deckelelement vorgesehen ist, wodurch eine Beeinträchtigung des Identifikationscodes bei der Befestigung des Deckelelements am Flansch vermieden werden kann.

Gemäß einer bevorzugten Ausführungsform der vorliegenden Erfindung ist vorgesehen, dass das Deckelelement wenigstens teilweise um den Flansch geschlagen ist. Beispielsweise wird das Deckelelement mit einem größeren Durchmesser als der Durchmesser des Basiselements, insbesondere des Flansches, bereitgestellt, wahlweise zunächst an dem Flansch befestigt und dann umgeschlagen, oder zuerst umgeschlagen und dann an dem Flansch befestigt. Der Identifikationscode ist dabei vorzugsweise derart an dem Deckelelement vorgesehen, dass der Identifikationscode nach der Herstellung der Portionskapsel auf der Flanschunterseite und dem Bodenbereich zugewandt angeordnet ist. Vorzugsweise ist das Deckelelements wenigstens an der Flanschoberseite befestigt. Hierdurch ist es vorteilhafterweise möglich, den Identifikationscode nicht an dem Flansch vorzusehen, wobei der Identifikationscode dennoch an der üblichen Position angeordnet ist.

Gemäß einer bevorzugten Ausführungsform der vorliegenden Erfindung ist vorgesehen, dass der optisch detektierbare Identifikationscode an dem Deckelelement angeordnet ist, insbesondere auf einer dem Bodenbereich zugewandten Seite. Hierdurch wird in vorteilhafter Weise sichergestellt, dass obwohl der Identifikationscode nicht an dem Flansch vorgesehen ist, er dennoch an der üblichen Position angeordnet ist.

Gemäß einer bevorzugten Ausführungsform der vorliegenden Erfindung ist vorgesehen, dass die Portionskapsel im Bereich des Flansches ein Einfassungselement aufweist, welches den Flansch und/oder das Deckelelement wenigstens teilweise umfasst, wobei das Einfassungselement vorzugsweise sich ununterbrochen auf beiden Seiten des Flansches erstreckt, wobei vorzugsweise der optisch detektierbare Identifikationscode auf dem Einfassungselement angeordnet ist. Besonders bevorzugt umfasst das Einfassungselement ein schrumpfbares Kunststoffmaterial. Ganz besonders bevorzugt ist das Einfassungselement im Wesentlichen U-förmig vorgesehen. Vorzugsweise wird das Einfassungselement von außen über Flansch und Deckelelement geführt und anschließend fixiert. Es ist bekannt, Schrumpffolien aus Kunststoff durch Wärmeinwirkung zu schrumpfen und zu fixieren. Besonders bevorzugt werden das Deckelelement und der Flansch durch das Einfassungselement in ihrer Lage relativ zueinander fixiert. Hierdurch können in vorteilhafter Weise das Deckelelement und der Flansch indirekt miteinander verbunden werden. Vorzugsweise ist das Einfassungselement im Wesentlichen transparent ausgebildet, zumindest auf der Flanschunterseite. Besonders bevorzugt ist der Identifikationscode auf dem Einfassungselement vorgesehen.

Gemäß einer bevorzugten Ausführungsform der vorliegenden Erfindung ist vorgesehen, dass der Flansch und das Deckelelement durch das Einfassungselement miteinander verbunden werden. Hierdurch ist es vorteilhafterweise möglich, Flansch und Deckelelement miteinander zu verbinden, ohne druch eine unmittelbare Krafteinwirkung diese strukturell zu beeinträchtigen.

Gemäß einer bevorzugten Ausführungsform der vorliegenden Erfindung ist vorgesehen, dass das Deckelelement eine im Wesentlichen flexible Deckelfolie und/oder ein wenigstens bereichsweise und/oder teilweise starres Deckelelement ist, wobei der optisch detektierbare Identifikationscode vorzugsweise auf dem teilweise starren Deckelelement radial außerhalb des Flansches und insbesondere auf der dem Bodenbereich zugewandten Seite des Deckelelements vorgesehen ist. Vorzugsweise ist das Deckelelement ein- oder mehrlagig vorgesehen. Im Falle eines starren Deckelelements ist das Deckelelement derart vorgesehen, dass in einem zentralen Aufstechbereich und/oder einem äußeren Aufstechbereich ein Aufstechen des Deckelelements durch Aufstechmittel der Getränkezubereitungsmaschine möglich ist. Dies kann beispielsweise durch eine geeignete Materialauswahl erfolgen. Besonders bevorzugt ist das Deckelelement über seine gesamte Erstreckung im Wesentlichen aus einem Material gefertigt, oder das Deckelelement ist in verschiedenen Bereich wenigstens teilweise aus verschiedenen Materialien gefertigt. Vorzugsweise bedeutet ein starres Deckelelement, dass das Deckelelement eine ausreichende Eigenstabilität aufweist, so dass ein über den Flansch hinaus auskragender Bereich eine im Wesentlichen horizontale Ausrichtung beibehält. Gleichzeitig ist das Deckelelement insbesondere wenigstens in den Aufstechbereichen flexibel genug, dass ein Aufstechen sicher und ohne Beschädigung der Getränkezubereitungsmaschine, insbesondere der Aufstechmittel, erfolgt. Besonders bevorzugt ist der Identifikationscode in einem über den Flansch hinausragenden Bereich vorgesehen. Hierdurch ist es in vorteilhafter Weise möglich, dass der Identifikationscode nicht an dem Flansch vorgesehen sein muss, wodurch eine Befestigung des Deckelelements an dem Flansch in üblicher Weise erfolgen kann.

Gemäß einer bevorzugten Ausführungsform der vorliegenden Erfindung ist vorgesehen, dass die Portionskapsel rotationssymmetrisch um eine mittig durch die Portionskapsel verlaufende Zentralachse ausgebildet ist. Dies ist besonders vorteilhaft für die Getränkezubereitung mittels Zentrifugation der Portionskapsel.

Gemäß einer bevorzugten Ausführungsform der vorliegenden Erfindung ist vorgesehen, dass der Flansch an seinem radial äußeren Ende eine Bördelung und insbesondere einen Rollrand aufweist.

Gemäß einer bevorzugten Ausführungsform der vorliegenden Erfindung ist vorgesehen, dass der Identifikationscode einen Strichcode, insbesondere ein Bit- und/oder Barcode, umfasst, dessen Codierungsstriche insbesondere in radialer Richtung verlaufen. Vorzugsweise umfassen die Kodierungsstriche weiße und/oder schwarze Balken gleicher oder ungleicher Dicke entlang einer Umfangsrichtung (konzentrisch um die Zentralachse). Besonders bevorzugt ist vorgesehen, dass der Identifikationscode entlang des gesamten Umfangs oder nur bereichsweise vorgesehen ist. Ganz besonders bevorzugt ist der Identifikationscode mehrfach entlang des Umfangs in vorbestimmten und insbesondere gleichmäßig voneinander beabstandeten Bereichen vorgesehen.

Gemäß einer bevorzugten Ausführungsform der vorliegenden Erfindung ist vorgesehen, dass das Basiselement aus Kunststoff gefertigt ist. Vorzugsweise wird das Basiselement durch Kalt- oder Warmverformung, insbesondere Tiefziehen hergestellt. Die Ausgestaltung des Basiselements mit Hohlraum wird vorzugsweise durch Thermoformen, beispielsweise Tiefziehen mittels Unterdruck, Überdruck und/oder einem beweglichen Stempel, erzeugt. Alternativ wird die Portionskapsel mittels Spritzgussverfahren, insbesondere im Einkomponenten-, Mehrkomponenten- oder In-Mold-Verfahren, hergestellt.

Das Basiselement ist vorzugsweise aus Aluminium (AI), Polyethylen (PE), Polypropylen (PP), Polyvinylchlorid (PVC), Polymethylmetacrylat (PMMA), Polycarbonat (PC), Polystyrol (PS), Polyphenylenether (PPO) und/oder Polyethylenterephthalat (PET) ausgebildet.

Das Deckelelement, insbesondere die Deckelfolie, ist vorzugsweise aus Aluminium (AI), Polyethylen (PE), Polypropylen (PP), Polyvinylchlorid (PVC), Polymethylmetacrylat (PMMA), Polycarbonat (PC), Polystyrol (PS), Polyphenylenether (PPO) oder Polyethylenterephthalat (PET) ausgebildet ist. Besonders bevorzugt ist das Deckelelement, insbesondere die Deckelfolie mehrlagig vorgesehen, wobei ganz besonders bevorzugt wenigstens eine Lage ein Aluminiummaterial umfasst. Das Deckelelement umfasst vorzugsweise eine Kunststoff-Aluminium-Verbundfolie oder eine Kunststofffolie oder eine Mehrschicht-Kunststofffolie.

Alternativ ist das Basiselement und/oder die Deckelfolie vollständig oder teilweise aus einem kompostierbaren oder biologisch abbaubaren Material gefertigt, welches vorzugsweise Cellulose, PLA (Polymilchsäure), Mais oder dergleichen umfasst. Vorzugsweise ist das Basiselement aus Papier hergestellt. Denkbar ist, dass das Material Cellulosefasern umfasst, die in eine Harzmatrix eingebettet sind.

Denkbar ist, dass die Deckelfolie und das Basiselement wenigstens teilweise aus dem gleichen Material bestehen.

Das Basiselement ist bevorzugt kegelstumpfförmig, kegelförmig, zylinderförmig, sphärisch, hemisphärisch, elliptisch oder teilelliptisch ausgebildet. Das Basiselement ist vorzugsweise starr oder halbstarr ausgebildet. Der durch das Basiselement gebildete Hohlraum dient der Aufnahme von Getränkerohmaterial, beispielsweise Kaffeeröstgranulat, Instantkaffee, Schokoladenpulver, Teeverschnitt, Milchpulver und/oder dergleichen. Das Deckelelement ist insbesondere zu wenigstens einem Zeitpunkt plan oder nahezu plan ausgebildet, insbesondere unmittelbar nach Verschließen der abgefüllten Portionskapsel durch das Deckelfolie. Etwaige Bombierungen des Deckelelements im Laufe der Zeit durch ein Ausgasen des Getränkerohmaterials sind dabei unbeachtlich.

Denkbar ist, dass die Portionskapsel rotationssymmetrisch um ihre Zentralachse ausgebildet ist. Die Zentralachse bilden somit eine zentrale Rotationssymmetrieachse, welche mittig durch die Portionskapsel und dabei insbesondere im Wesentlichen senkrecht zu einer Haupterstreckungsebene des Deckelelements verläuft. Der Flansch des Basiselements verläuft bevorzugt in einem Winkel zwischen 70 bis 110 Grad, besonders bevorzugt von 80 bis 100 Grad und ganz besonders bevorzugt von im Wesentlichen 90 Grad zur Zentralachse. Der Flansch ist insbesondere geschlossen, umlaufend ausgebildet. Das freie, äußere Ende des Flansches weist vorzugsweise einen Wulst, eine Bördelung oder einen sogenannten Rollrand auf, um Verletzungen des Benutzers an dem scharfkantigen Ende zu vermeiden.

Die Portionskapsel kann eine oder mehrere Getränkerohmaterialien enthalten. Getränkerohmaterial kann es sich um eine Flüssigkeit, einen Sirup, einen Feststoff, ein Pulver, Kaffee- oder Kakaosatz, Teeblätter oder eine Kombination davon handeln. Das Getränkerohmaterial kann in einer Getränkezubereitungsmaschine und/oder einem Getränkezubereitungssystem verdünnt oder extrahiert werden, um ein Getränk herzustellen.

Ein weiterer Gegenstand der vorliegenden Erfindung ist ein Getränkezubereitungssystem umfassend eine Getränkezubereitungsmaschine und eine erfindungsgemäße Portionskapsel, wobei die Getränkezubereitungsmaschine eine die Portionskapsel aufnehmende Brühkammer aufweist, wobei die Getränkezubereitungsmaschine einen Detektor zur Detektion des optisch detektierbaren Identifikationscodes aufweist, wobei die Getränkezubereitungsmaschine ein zentral in der Brühkammer angeordnetes erstes selektiv zwischen einer zurückgezogenen Position und einer ausgefahrenen Position bewegbares Aufstechmittel aufweist, wobei das erste Aufstechmittel in der ausgefahrenen Position das Deckelelement der Portionskapsel durchsticht, wobei das erste Aufstechmittel eine Hohlnadel umfasst, durch die in der ausgefahrenen Position eine unter Druck stehende Flüssigkeit dem Hohlraum der Portionskapsel zuführbar ist, wobei die Getränkezubereitungsmaschine ein zweites bewegbares Aufstechmittel umfasst, wobei das zweite Aufstechmittel derart ausgebildet ist, dass es das Deckelelement in einem radial von der Zentralachse beabstandeten, insbesondere nahe des Flansches vorgesehenen, Bereich zur Bildung wenigstens einen Getränkeauslasses perforiert.

Das erfindungsgemäße Getränkezubereitungssystem ist besonders vorteilhaft, da der Identifikationscode der Portionskapsel mittels des Detektors auslesbar ist, auch wenn der Identifikationscode nicht an dem Flansch angeordnet ist oder das Deckelelement nicht an dem Flansch befestigt ist.

Die zu diesem Gegenstand der vorliegenden Erfindung erläuterten Vorteile und die zugehörigen Ausführungsformen gelten entsprechend auch für die anderen Gegenstände der vorliegenden Erfindung und umgekehrt.

Vorzugsweise sind das erste und das zweite Aufstechmittel sind im Wesentlichen unabhängig voneinander ausgebildet. Besonders bevorzugt ist die Getränkezubereitungsmaschine derart ausgebildet, dass erst das erste Aufstechmittel das Deckelelement der Portionskapsel in einem zentralen Aufstechbereich perforiert, wobei das erste Aufstechmittel zum Zuführen der Flüssigkeit insbesondere während der Getränkezubereitung in der ausgefahrenen Position bleibt, wobei anschließend das zweite Aufstechmittel das Deckelelement in einem äußeren, vorzugsweise im Wesentlichen kreisringförmigen Bereich, insbesondere in der Nähe des Flansches, perforiert und anschließend wieder in die zurückgezogene Position verfahren wird, so dass das Getränk ungehindert durch die derart gebildeten Getränkeauslassöffnungen austreten kann.

Gemäß einer bevorzugten Ausführungsform dieses Gegenstands der vorliegenden Erfindung ist vorgesehen, dass die Brühkammer zur Getränkezubereitung um eine Zentralachse rotierbar ausgebildet ist. Hierdurch ist es vorteilhafterweise möglich, dass die in den Hohlraum unter Druck eingeführte Flüssigkeit das Getränkerohmaterial unter Bildung des Getränks durchströmt und das Getränk auf Grund der Fliehkräfte an der Kapselwandung entlang wieder in Richtung des Deckelelements strömt und aus den Getränkeauslassöffnungen austritt.

Vorzugsweise ist der Detektor derart vorgesehen ist, dass der optisch detektierbare Identifikationscode vor, während und/oder nach der Rotation der Brühkammer und/oder der Portionskapsel ausgelesen wird. Hierdurch wird in besonders vorteilhafter Weise eine besonders flexible Getränkezubereitungsmaschine bereitgestellt.

Ein weiterer Gegenstand der vorliegenden Erfindung ist eine Verwendung einer erfindungsgemäßen Portionskapsel zur Zubereitung eines Getränks mit Hilfe einer Getränkezubereitungsmaschine, insbesondere in einem erfindungsgemäßen Getränkezubereitungssystem.

Die zu diesem Gegenstand der vorliegenden Erfindung erläuterten Vorteile und die zugehörigen Ausführungsformen gelten entsprechend auch für die anderen Gegenstände der vorliegenden Erfindung und umgekehrt.

Noch ein weiterer Gegenstand der vorliegenden Erfindung ist ein Verfahren zur Herstellung einer Portionskapsel, insbesondere einer erfindungsgemäßen Portionskapsle, wobei in einem ersten Schritt ein Basiselement mit einem Bodenbereich, einem umlaufenden Flansch an einem dem Bodenbereich gegenüberliegenden Ende und einer sich von dem Bodenbereich zum umlaufenden Flansch erstreckenden Kapselwandung bereitgestellt wird, wobei das Basiselement einen Hohlraum zum Aufnehmen eines Getränkerohmaterials bildet, wobei in einem zweiten Schritt ein Deckelement derart mit dem Basiselement verbunden wird, dass es den Hohlraum verschließt, wobei ein optisch detektierbarer Identifikationscode an dem Flansch und/oder an dem Deckelelement vorgesehen wird.

Hierdurch ist es in besonders vorteilhafter Weise möglich, dass eine Portionskapsel bereitgestellt wird, bei der nicht gleichzeitig der Identifikationscode an dem Flansch angeordnet und das Deckelelement an dem Flansch befestigt ist. Hierdurch werden vorteilhafterweise Beeinträchtigungen oder Beschädigungen an dem Flansch und/oder dem Identifikationscode während der Herstellung der Portionskapsel und/oder während der Verwendung der Portionskapsel vermieden.

Die zu diesem Gegenstand der vorliegenden Erfindung erläuterten Vorteile und die zugehörigen Ausführungsformen gelten entsprechend auch für die anderen Gegenstände der vorliegenden Erfindung und umgekehrt.

Gemäß einer bevorzugten Ausführungsform dieses Gegenstands der vorliegenden Erfindung ist vorgesehen, dass ein wenigstens teilweise und/oder wenigstens bereichsweise starres Deckelelement derart mit dem Basiselement, insbesondere stoffschlüssig, verbunden wird, dass ein sich von der Kapselwandung radial nach innen erstreckender Flanschbereich gebildet wird. Besonders bevorzugt ragt das Deckelelement radial über den Flansch hinaus. Ganz besonders bevorzugt ist der Identifikationscode an dem Deckelelement, insbesondere in dem über den Flansch hinausragenden Bereich vorgesehen. Hierdurch ist es vorteilhafterweise möglich, eine Portionskapsel mit einem optisch detektierbaren Identifikationscode bereitzustellen, bei der der Identifikationscode nicht an dem Flansch vorgesehen ist. Das Deckelelement kann beispielsweise an den Flansch geklebt und/oder gesiegelt werden. Insbesondere bei einer Befestigung mittels Druck und/oder Wärme ist es möglich, das Basiselement, insbesondere den Flansch, im Kontaktbereich derart zu verformen, dass ein in Richtung des Hohlraums gerichteter Flanschbereich erzeugt wird. Dies ist besonders vorteilhaft, da somit eine größere Befestigungsfläche zur Verfügung steht und somit eine sichere Verbindung des Deckelelements mit dem Basiselement ermöglicht wird.

Gemäß einer bevorzugten Ausführungsform dieses Gegenstands der vorliegenden Erfindung ist vorgesehen, dass ein Einfassungselement, insbesondere in Form eine Schrumpffolienüberzugs, von außen über den Flansch und das Deckelelement gezogen wird und dann, insbesondere durch Wärmeeinwirkung, derart geschrumpft wird, dass das Deckelelement fest an dem Flansch fixiert ist. Hierdurch ist es in vorteilhafter Weise möglich, dass durch ein separates Element Flansch und Deckelelement miteinander verbunden werden oder zumindest in ihrer relativen Lage zueinander fixiert werden. Selbstverständlich sind auch andere Einfassungselemente denkbar. Entscheidend ist, dass ein separates Element derart über Flansch und Deckelelement gestülpt und fixiert wird. Beispielsweise wird das Einfassungselement mit dem Flansch und/oder dem Deckelelement wenigstens abschnittsweise verklebt. Besonders bevorzugt ist das Einfassungselement wenigstens bereichsweise transparent. Hierdurch ist es vorteilhafter Weise möglich, dass der Identifikationscode in bekannter Weise an dem Flansch vorgesehen ist, er aber durch das Einfassungselement weiterhin auslesbar ist. Dadurch, dass Flansch und Deckelelement nicht direkt miteinander verbunden werden, wird eine Beeinträchtigung des Identifikationselements vorteilhafterweise ausgeschlossen.

Weitere Einzelheiten, Merkmale und Vorteile der Portionskapsel, des Getränkezubereitungssystems, der Verwendung oder dem Verfahren ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Portionskapsel, welche den wesentlichen Erfindungsgedanken nicht einschränken.

### Kurze Beschreibung der Zeichnungen

- **Figur 1a**: zeigt eine perspektivische Ansicht einer Portionskapsel gemäß einer beispielhaften ersten Ausführungsform der vorliegenden Erfindung.
- **Figur 1b**: zeigt eine Seitenansicht der Portionskapsel gemäß der beispielhaften ersten Ausführungsform der vorliegenden Erfindung.
- **Figuren 2a-d**: zeigt schematische Seitenansichten einer Portionskapsel gemäß verschiedener beispielhafter Ausführungsformen der vorliegenden Erfindung.
- **Figur 3**: zeigt eine schematische Prinzipskizze einer Verwendung einer Portionskapsel in einer Getränkezubereitungsmaschine zur Getränkezubereitung gemäß einer beispielhaften Ausführungsform der vorliegenden Erfindung.
- **Figur 4**: zeigt einen schematischen Querschnitt einer Portionskapsel gemäß einer beispielhaften zweiten Ausführungsform der vorliegenden Erfindung.
- **Figur 5**: zeigt einen schematischen Querschnitt einer Portionskapsel gemäß einer beispielhaften dritten Ausführungsform der vorliegenden Erfindung.
- **Figur 6**: zeigt einen schematischen Querschnitt einer Portionskapsel gemäß einer beispielhaften vierten Ausführungsform der vorliegenden Erfindung.
- **Figuren 7a-b**: zeigen einen schematischen Querschnitt einer Portionskapsel gemäß einer beispielhaften fünften Ausführungsform der vorliegenden Erfindung zu zwei verschiedenen Zeitpunkten bei der Herstellung der Portionskapsel.
- **Figur 8**: zeigt einen schematischen Querschnitt einer Portionskapsel gemäß einer beispielhaften sechsten Ausführungsform der vorliegenden Erfindung.
- **Figur 9**: zeigt einen schematischen Querschnitt einer Portionskapsel gemäß einer beispielhaften siebten Ausführungsform der vorliegenden Erfindung.
- **Figur 10**: zeigt einen schematischen Querschnitt einer Portionskapsel gemäß einer beispielhaften achten Ausführungsform der vorliegenden Erfindung.
- **Figur 11**: zeigt einen schematischen Querschnitt einer Portionskapsel gemäß einer beispielhaften neunten Ausführungsform der vorliegenden Erfindung.
- **Figur 12**: zeigt einen schematischen Querschnitt einer Portionskapsel gemäß einer beispielhaften zehnten Ausführungsform der vorliegenden Erfindung.
- **Figur 13**: zeigt einen schematischen Querschnitt einer Portionskapsel gemäß einer beispielhaften elften Ausführungsform der vorliegenden Erfindung.

### Ausführungsformen der Erfindung

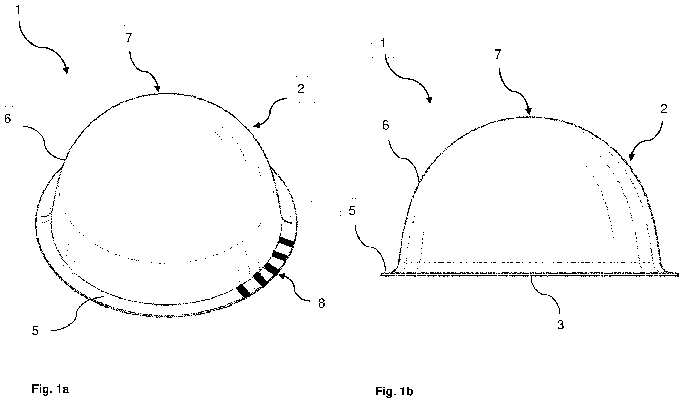

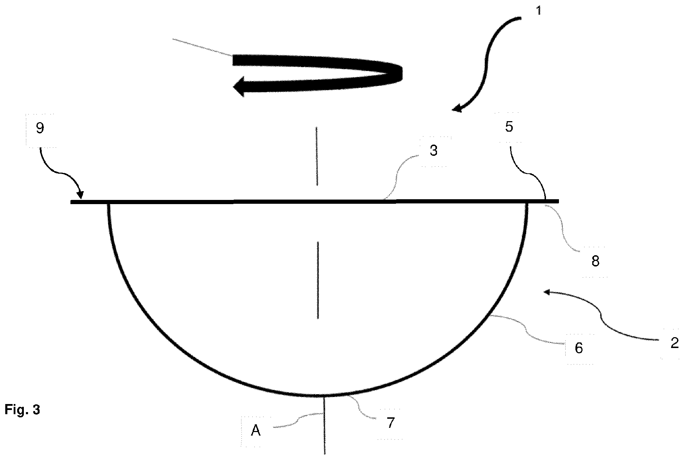

In **Figur 1a** ist eine perspektivische Ansicht einer Portionskapsel 1 gemäß einer beispielhaften ersten Ausführungsform der vorliegenden Erfindung dargestellt. Die Portionskapsel 1 ist zur Verwendung in einer Getränkezubereitungsmaschine zur Zubereitung eines Getränks, insbesondere durch Durchleitung einer Flüssigkeit durch die Portionskapsel 1, vorgesehen. Eine derartige Verwendung wird in Zusammenhang mit **Figur 3** beschrieben werden.

Zusätzlich ist in **Figur 1b** eine Seitenansicht der Portionskapsel 1 gemäß der beispielhaften ersten Ausführungsform der vorliegenden Erfindung dargestellt.

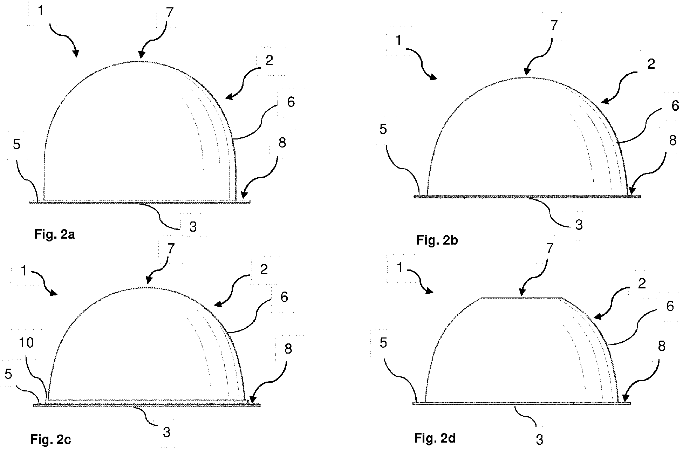

Die Portionskapsel 1 weist ein Basiselement 2 auf. Das Basiselement 2 umfasst eine Kapselwandung 6 (auch als Kapsel(seiten)wand oder Seitenwandung bezeichnet). Die Kapselwandung 6 erstreckt sich von einem Bodenbereich 7 (auch als Kapselboden bezeichnet) bis zu einem umlaufenden Flansch 5, der seitlich absteht und insbesondere umlaufend ausgebildet ist. Der Bodenbereich 7 geht dabei vorzugsweise fließend in die Kapselwandung 6 über. Im Zusammenhang mit den **Figuren 2a****-d** werden jedoch auch alternative Ausführungsformen erläutert, bei denen eine klare Trennung zwischen Bodenbereich 7 und Kapselwandung 6 möglich ist. Gemäß der hier dargestellten Ausführungsform ist das Basiselement 2 im Wesentlichen halbkugelförmig ausgebildet.

Das Basiselement 2 spannt einen Hohlraum auf, welcher zur Aufnahme von Getränkerohmaterial vorgesehen ist, beispielsweise geröstetem und gemahlenem Kaffee. Auf der dem Bodenbereich 7 abgewandten Seite weist das Basiselement eine Einfüllöffnung auf, durch welche der Hohlraum mit dem Getränkerohmaterial befüllbar ist.

Die bevorzugte Verwendung der erfindungsgemäßen Portionskapsel 1 beinhaltet ein Rotieren der Portionskapsel 1 um ihre mittig durch die Portionskapsel 1 verlaufende Zentralachse A. Um eine möglichst störungsfreie Rotation zu gewährleisten, ist die Portionskapsel 1 und insbesondere das Basiselement 2 vorzugsweise rotationssymmetrisch um die Zentralachse A ausgebildet.

Zwischen dem Bodenbereich 7 und dem Flansch 5 erstreckt sich die Kapselwandung 6 um den Hohlraum. In radialer Richtung, bezogen auf die Zentralachse A, wobei die radiale Richtung senkrecht zu der Zentralachse A ausgerichtet ist. steht der Flansch 5, der kreisförmig und somit in Umfangsrichtung umlaufend ausgebildet ist, nach außen über die Kapselwandung 6 vor.

Der Flansch 5 ist üblicherweise mit einem Deckelelement (auch als Kapseldeckel oder Membran bezeichnet), hier beispielsweise in Form einer insbesondere kreisförmigen Deckelfolie 3, fest verbunden, wobei die Deckelfolie 3 den Hohlraum auf der offenen Seite des Basiselements 2, vorzugsweise hermetisch, verschließt. Der Flansch 5 weist hierfür vorzugsweise eine der Deckelfolie 3 zugewandte Siegelebene auf, welche sich im Wesentlichen rechtwinklig zur Zentralachse A erstreckt. Die Deckelfolie 3 ist in ihrem Randbereich zumindest in einigen Ausführungsformen an den Flansch 5 und insbesondere auf die Siegelebene gesiegelt, geschweißt oder geklebt, also mit diesem stoffschlüssig verbunden.

Der Hohlraum ist mit dem Getränkerohmaterial, beispielsweise Kaffeeröstgranulat, geröstetes und gemahlenes Kaffeepulver, Instantkaffee, Schokoladenpulver, Teeverschnitt, Milchpulver und/oder dergleichen befüllt (aus Gründen der Übersichtlichkeit ist das Getränkerohmaterial nicht illustriert) und durch die Deckelfolie 3 luftdicht verschlossen.

Um eine Steuerung der Getränkezubereitungsmaschine zu ermöglichen und insbesondere eine Kompatibilität zwischen der Getränkezubereitungsmaschine und der Portionskapsel 1 zu gewährleisten, umfasst die Portionskapsel 1 einen optisch detektierbaren Identifikationscode, der hier als beispielhaft als Barcode 8 ausgeführt ist. Üblicherweise ist dieser Identifikationscode auf der Unterseite, d.h. der der Deckelfolie 3 abgewandten und/oder der dem Bodenbereich 7 zugewandten Seite des Flansches 5 vorgesehen. Der Barcode 8 ist dabei ein Strichcode. Der Barcode 8 kann, wie hier angedeutet, lediglich in einem Umfangsabschnitt vorgesehen sein, er kann in mehreren, voneinander vorzugsweise gleichmäßig beabstandeten Umfangsbereichen vorgesehen sein oder er kann vollständig umlaufend vorgesehen sein. Der Barcode 8 wird dabei vorzugsweise aufgedruckt, eingeprägt oder in sonstiger Weise, welche eine optische Detektion durch einen (optischen) Detektor der Getränkezubereitungsmaschine ermöglicht, erzeugt.

In den **Figuren 1** **und** **2** ist die Portionskapsel 1 derart orientiert, dass die Flanschunterseite in der Zeichenebene nach oben weist, d.h. die Portionskapsel 1 ist auf der Deckelfolie 3 liegend dargestellt. Die übliche, insbesondere auch in den **Figuren 3 bis 13****,** verwendete und im Rahmen der vorliegenden Beschreibung referenzierte Orientierung ist allerdings umgekehrt, d.h. der Bodenbereich 7 ist unten und die durch die Deckelfolie 3 verschlossene Einfüllseite ist oben.

Ein übliches Herstellungsverfahren für eine derartige Portionskapsel sieht beispielsweise vor, dass der Barcode 8 auf die Flanschunterseite gedruckt wird und davor oder danach die Deckelfolie 3 an den Flansch 5 angesiegelt wird. Durch das Siegeln kann der Barcode 8 unmittelbar zerstört oder beschädigt werden und/oder der Flansch wird derartig beeinträchtigt, beispielsweise durch mechanische Einwirkung, Hitze, Druck und/oder Strahlung, dass die strukturelle Beschaffenheit, beispielsweise die Oberflächenrauigkeit, des Flansches nachteilig beeinträchtigt wird. Dadurch wird eine fehlerfreie Detektion des Barcodes 8 gefährdet.

Es ist daher wünschenswert, wahlweise den Barcode 8 an einem anderen Element vorzusehen oder wenigstens nicht die Deckelfolie 3 an dem Flansch zu befestigen.

In den **Figuren 2a****-d** sind schematische Seitenansichten einer Portionskapsel 1 gemäß verschiedener beispielhafter Ausführungsformen der vorliegenden Erfindung dargestellt. Der Vorteil einer Getränkezubereitung durch Zentrifugation besteht darin, dass technisch vor allem der Flansch- und Deckelfolienbereich der Portionskapsel 1 entscheidend sind, die Form des Basiselements 2 jedoch weitgehend frei gewählt werden kann. Dies ermöglicht insbesondere eine Vielzahl von unterschiedlichen Größen, d.h. Erstreckungen der Portionskapsel 1 entlang der Zentralachse A. Hieraus resultieren unterschiedliche Fassungsvolumina der jeweiligen Hohlräume. Somit werden beispielsweise unterschiedliche Getränke und/oder Getränkeintensitäten ermöglicht.

Die **Figuren 2a und 2b** zeigen beispielsweise zwei Ausführungsformen mit im Wesentlichen ähnlich geformten Basiselementen 2, aber unterschiedlichen axialen Längen und daher anderen Volumina. In beiden Fällen ist das Basiselement 2, insbesondere der Bodenbereich 7 und wenigstens Teile der Kapselwandung 6 im Wesentlichen halbkugelförmig ausgebildet. Die in **Figur 2a** gezeigte Portionskapsel 1 weist jedoch ein Basiselement auf, dass an den Flansch 5 angrenzend einen im Wesentlichen gerade und insbesondere senkrecht zum Flansch 5 verlaufenden Kapselwandungsabschnitt aufweist. Die in **Figur 2c** dargestellte Portionskapsel 1 wiederum weist zwischen der Kapselwandung 6 und dem Flansch 5 eine Stufe 10 auf. Diese Stufe 10 ist vorzugsweise Teil der Kapselwandung 6. In **Figur 2d** wiederum ist eine Ausführungsform dargestellt, bei der der Bodenbereich 7 flach ausgebildet ist. Der Bodenbereich 7 umfasst also eine Haupterstreckungsebene, die vorzugsweise parallel zu der Haupterstreckungsebene des Flansches 5 und/oder der Deckelfolie 3 ausgerichtet ist.

In **Figur 3** ist eine schematische Prinzipskizze einer Verwendung einer Portionskapsel 1 in einer Getränkezubereitungsmaschine zur Getränkezubereitung gemäß einer beispielhaften Ausführungsform der vorliegenden Erfindung dargestellt. Die Portionskapsel 1 ist dazu vorgesehen, in eine Brüheinheit einer Getränkezubereitungsmaschine eingeführt zu werden, um ein Getränk herzustellen. Die Brüheinheit umfasst ein erstens Brühkammerteil und ein zweites Brühkammerteil, wobei das erste und das zweite Brühkammerteil relativ zueinander zwischen einer angenäherten Position, in welcher das erste und das zweite Brühkammerteil eine geschlossene Brühkammer bilden, und einer offenen Position, in welcher das erste und das zweite Brühkammerteil zum Einsetzen oder Auswerfen der Portionskapsel 1 voneinander beabstandet sind, bewegbar, insbesondere verschwenkbar oder verschiebbar ist. Lediglich der Vollständigkeit halber wird in diesem Zusammenhang angemerkt, dass trotz der Bezeichnung "Brüheinheit" und "Brühkammer" auch Getränkezubereitungen erfasst und gemeint sind, die nicht im engeren Sinne ein Aufbrühen und/oder Extrahieren umfassen. Insbesondere ist auch ein Auflösen mit warmen und/oder kalten Wasser erfasst.

Zur Getränkezubereitung wird eine Portionskapsel 1 in die Brüheinheit in der offenen Position eingesetzt und die Brüheinheit geschlossen. Ein erstes Aufstechmittel wird in einem zentralen Bereich, vorzugsweise exakt mittig, d.h. in Verlängerung der Zentralachse A, aus einer zurückgezogenen Position in eine ausgefahrene Position bewegt. Dabei durchsticht das erste Aufstechmittel die Deckelfolie 3. Der Übersichtlichkeit halber ist die Getränkezubereitungsmaschine mit ihren Komponenten in den **Figuren** nicht dargestellt.

Das erste Aufstechmittel umfasst vorzugsweise eine Hohlnadel und/oder eine Injektionsnadel, durch die eine Flüssigkeit, insbesondere erhitztes und unter Druck, beispielsweise zwischen 5 und 20 bar, stehendes Wasser in den Hohlraum eingespritzt wird. Die Flüssigkeit (auch als Brühflüssigkeit bezeichnet) durchquert das Getränkerohmaterial und bildet in Wechselwirkung mit diesem ein Getränk.

Ein zweites Aufstechmittel, welches vorzugsweise wenigstens ein Aufstechmesser, insbesondere mehrere kranzförmig angeordnete Aufstechmesser, umfasst, die insbesondere im Wesentlichen entlang eines Kreisrings in der Nähe des Flansches 5 angeordnet sind, werden aus einer zurückgezogenen in eine ausgefahrene Position verfahren, so dass sie die Deckelfolie unter Bildung von Getränkeauslassöffnungen lokal durchtrennen, und wieder in die zurückgezogene Position verfahren, um die Getränkeauslassöffnungen nicht zu blockieren.

Die Portionskapsel 1 und/oder die Brüheinheit wird nun um die Zentralachse A rotiert, vorzugsweise durch einen Antrieb, wie etwa einen Elektromotor. Dadurch wird die Flüssigkeit und/oder das Getränk durch Zentrifugalkräfte nach außen in Richtung der Kapselwandung 6 und dort dann entlang der Kapselwandung 6 nach oben geschleudert. Das fertige Getränk tritt dann durch die Getränkeauslassöffnungen aus und kann dort in Richtung eines Getränkeauslasses der Getränkezubereitungsmaschine geleitet werden.

Alternativ oder zusätzlich zu der Deckelfolie 3 kann in der geschlossenen Position der Bodenbereich 7 perforiert werden, um eine Perforationsöffnung zum Einbringen von Flüssigkeit oder zum Ausleiten des hergestellten Getränks zu erzeugen.

Durch ein optionales Filtermedium können etwaige Partikel des Getränkerohmaterials aus dem Getränk gefiltert und in der Portionskapsel 1 zurückgehalten werden. Vorzugsweise fungiert aber die insbesondere mehrfach perforierte Deckelfolie 3 als Filterelement.

Die Portionskapsel 1 weist nun einen insbesondere von einem Detektor der Getränkezubereitungsmaschine optisch detektierbaren Identifikationscode auf. Dieser Identifikationscode dient vorzugsweise dazu, dass die Portionskapsel 1 in der Getränkezubereitungsmaschine identifiziert werden kann und/oder Brühparameter gesteuert werden können. Somit kann von der Getränkezubereitungsmaschine beispielsweise verifiziert werden, ob es sich bei der in der Brühkammer befindlichen Portionskapsel 1 um eine kompatible Portionskapsel 1 handelt, und/oder ein passendes Brühprogramm für das in der Portionskapsel 1 befindliche Getränkerohmaterial automatisch ausgewählt und gestartet werden. Denkbar ist auch, dass konkret zu verwendende Brühparameter, wie beispielsweise die Wassertemperatur, die Wassermenge, der Wasserdruck und/oder die Rotationsgeschwindigkeit der Portionskapsel 1 beim Aufbrühen, in den optisch detektierbaren Identifikationscode eingebettet sind und mittels des Detektors ausgelesen werden.

Der optisch detektierbare Identifikationscode ist insbesondere ein maschinenauslesbarer Code in Form eines eindimensionalen oder mehrdimensionalen Bit- oder Barcodes 8. Der Bit- oder Barcode 8 ist dabei vollständig oder teilweise umlaufend als Kreis oder Teilkreis um die Zentralachse A der Portionskapsel 1 ausgebildet. Die einzelnen benachbarten Striche, aus welchen der insbesondere zwei- oder mehrfarbige Bit- oder Barcode 8 aufgebaut ist, erstrecken sich dann vorzugsweise in radialer Richtung und sind in Umfangsrichtung nebeneinander angeordnet. Der Barcode 8 ist dabei insbesondere auf einer Seite (auch als Unterseite bezeichnet) des Flansches 5 angeordnet, die dem Deckelelement, hier insbesondere der Deckelfolie 3 abgewandt ist.

Das Basiselement 2 und die Deckelfolie 3 sind vorzugsweise aus Aluminium (AI), Polyethylen (PE), Polypropylen (PP), Polyvinylchlorid (PVC), Polymethylmetacrylat (PMMA), Polycarbonat (PC), Polystyrol (PS), Polyphenylenether (PPO) und/oder Polyethylenterephthalat (PET), insbesondere ein- oder mehrlagig, gefertigt. Die topfförmige oder sphärische Ausgestaltung des Basiselements 2 wird vorzugsweise durch Thermoformen, beispielsweise Tiefziehen mittels Unterdruck, Überdruck und/oder einem beweglichen Stempel, erzeugt. Alternativ wird die Portionskapsel mittels Spritzgussverfahren, insbesondere im Einkomponenten-, Mehrkomponenten- oder In-Mold-Verfahren, hergestellt. Als weitere Alternative wäre denkbar, dass das Basiselement 2 und/oder die Deckelfolie 3 vollständig oder teilweise aus einen biologisch abbaubaren Material, insbesondere aus Cellulosefasern, die vorzugsweise in eine Harzmatrix eingebettet sind, hergestellt ist.

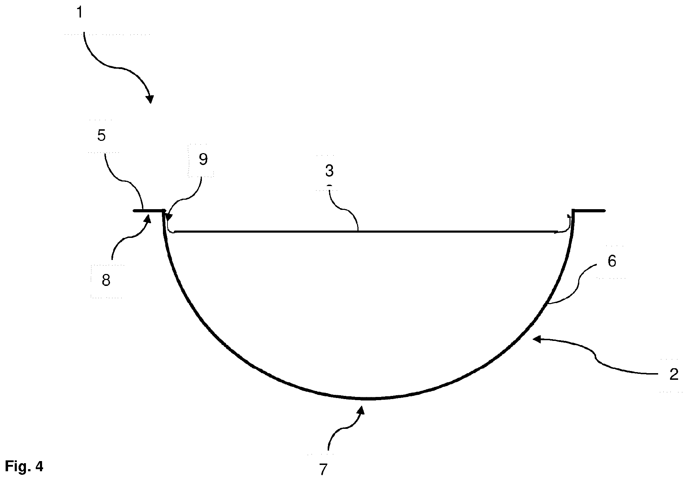

In **Figur 4** ist ein schematischer Querschnitt einer Portionskapsel 1 gemäß einer beispielhaften zweiten Ausführungsform der vorliegenden Erfindung dargestellt. Um die bereits erläuterten Probleme der gattungsgemäßen Portionskapseln zu vermeiden, ist hier die Deckelfolie 3 nicht an dem Flansch 5, sondern an der Innenseite der Kapselwandung 6 befestigt. Dies erfolgt besonders bevorzugt durch (Ultraschall-)Siegeln, beispielsweise mit einer Sonotrode, die die Deckelfolie 3 in den Hohlraum ein Stück weit einführt, wobei sich beim Einführen ein Randbereich der Deckelfolie 3 an die Kapselwandung 6 anschmiegt, und dann die Deckelfolie 3 seitlich an die Kapselwandung 6 ansiegelt. Die Ansiegelung erfolgt insbesondere in wenigstens einem Befestigungsbereich 9. Dieser ist vorzugsweise vollständig umlaufend vorgesehen. Alternativ ist es aber auch möglich, dass eine Vielzahl von in Umfangsrichtung voneinander beabstandeten Befestigungsbereichen vorgesehen ist. Hier ist der Befestigungsbereich 9 nun oberhalb der Haupterstreckungsebene der Deckelfolie 3 angeordnet.

Der Barcode 8 kann in diesem Fall in üblicher Weise auf der Flanschunterseite vorgesehen werden, da der Flansch 5 nicht durch die Befestigung der Deckelfolie 3 beeinträchtigt wird.

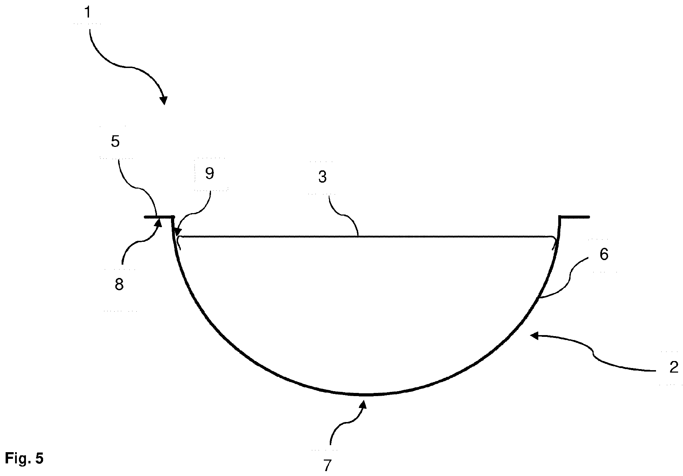

In **Figur 5** ist ein weiterer schematischer Querschnitt einer Portionskapsel 1 gemäß einer beispielhaften dritten Ausführungsform der vorliegenden Erfindung dargestellt, wobei diese dritte Ausführungsform der zweiten Ausführungsform ähnelt. Auch hier wird die Deckelfolie 3 seitlich an einer Innenseite der Kapselwandung 6 befestigt. Hier ist nun jedoch der Befestigungsbereich 9 unterhalb der Haupterstreckungsebene der Deckelfolie 3 angeordnet. Hierzu kann die Deckelfolie beispielsweise von außen durch die Kapselwandung 6 fixiert werden. Alternativ oder zusätzlich wird ein Randbereich der Deckelfolie vor dem Einsetzen in das Basiselement 2 umgebogen und beispielsweise mit einem Klebstoff beschichtet und eingesetzt. Es ist vorstellbar, dass der Klebstoff - oder ein alternatives stoffschlüssiges Verbindungsmittel - von außen durch Energieeinwirkung, beispielsweise gezieltes Erwärmen und/oder Bestrahlen, aktiviert wird.

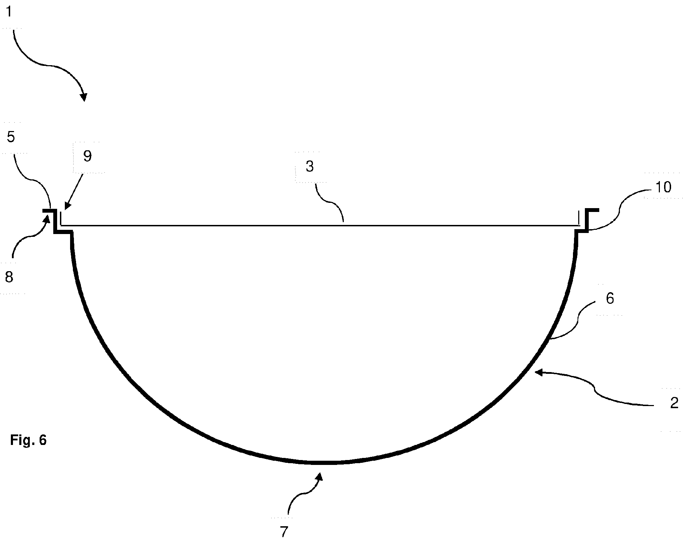

Die Portionskapseln 1 gemäß der Ausführungsformen der **Figuren 4** **und** **5** weisen den Nachteil auf, dass die Befestigungshöhe der Deckelfolie 3 schwer steuerbar ist. Dies ist jedoch wiederum nachteilig, da ein sicheres Anstechen durch das erste und/oder das zweite Aufstechmittel nicht gewährleistet werden kann. Daher ist in **Figur 6** ein schematischer Querschnitt einer Portionskapsel 1 gemäß einer beispielhaften vierten Ausführungsform der vorliegenden Erfindung dargestellt. Hier weist das Basiselement 2 unterhalb des Flansches 5 eine Stufe 10 in der Kapselwandung 6 auf. Durch diese Stufe 10 ist es vorteilhaft möglich, eine exakte Positionierung der Deckelfolie 3 zu gewährleisten. Die Stufe 10 hat eine umlaufende, im Wesentlichen parallel zu dem Flansch 5 ausgebildete, d.h. insbesondere horizontale, Schulter und einen vorzugsweise ungefähr vertikal ausgerichtetes Kapselwandungsbereich zwischen der Schulter und dem Flansch 5. Besonders bevorzugt wird die Deckelfolie 3 seitlich an dem senkrechten Kapselwandungsbereich befestigt, insbesondere angesiegelt. D.h. der Befestigungsbereich 9 ist wenigstens teilweise in dem senkrechten Kapselwandungsbereich vorgesehen. Zusätzlich oder alternativ kann eine Befestigung auch an der horizontalen Schulter erfolgen. Auch hier kann der Barcode 8 auf der Flanschunterseite angeordnet werden. Zudem ist jedoch vorteilhafterweise über die Dimensionierung der Stufe 10 eine exakte Positionierung der Deckelfolie 3 möglich.

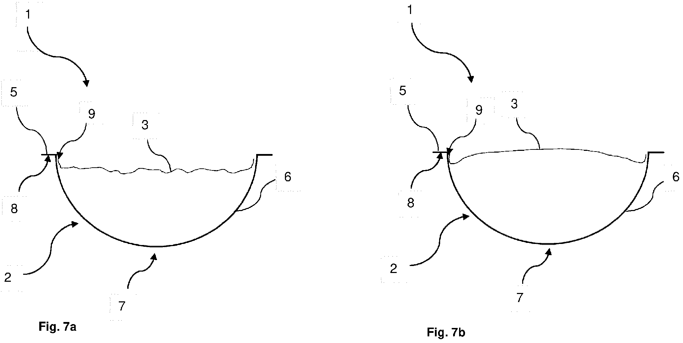

In den **Figuren 7a****-b** sind schematische Querschnitte einer Portionskapsel 1 gemäß einer beispielhaften fünften Ausführungsform der vorliegenden Erfindung zu zwei verschiedenen Zeitpunkten bei der Herstellung der Portionskapsel 1 dargestellt. In **Figur 7a** ist die Situation unmittelbar vor und/oder nach der Befestigung der Deckelfolie 3 dargestellt. Erneut erfolgt hier eine Befestigung der Deckelfolie in einem Randbereich an der Innenseite der Kapselwandung 6. Die Deckelfolie 3 ist nun jedoch besonders elastisch ausgebildet und/oder weist einen Materialspeicher auf. Darunter soll insbesondere verstanden werden, dass die Deckelfolie im befestigten Zustand nicht gespannt ist. An dem Schnittpunkt der Haupterstreckungsebene der Deckelfolie 3 mit der Kapselwandung 6 wird ein lokaler Innendurchmesser der Portionskapsel 1 definiert. Daraus ergibt sich auch eine Querschnittsfläche an dieser Stelle. Die Deckelfolie 3 weist nun insbesondere eine effektive Fläche auf, die größer ist als diese Querschnittsfläche.

Diese Ausführungsform eignet sich vor allem für nach der Befüllung der Portionskapsel 1 ausgasende Getränkerohmaterialien, beispielsweise gerösteten und gemahlenen Kaffee. Im Fall von Kaffee entsteht durch chemische Prozesse im Kaffee Kohlenstoffdioxid. Dieser führt nun zu einer Bombierung der Deckelfolie 3, d.h. die Deckelfolie 3 wird durch das entstehende Gas nach außen gewölbt. Dies ist in **Figur 7b** dargestellt. Hierdurch wird vorteilhafterweise erreicht, dass die Deckelfolie in einfacher Weise an der Innenseite der Kapselwandung 6 befestigt werden kann, insbesondere derart, dass der Befestigungsbereich 9 oberhalb der Haupterstreckungsebene der Deckelfolie 3 liegt, aber zum Zeitpunkt der Verwendung der Portionskapsel 1 die Deckelfolie in dem durch das erste Aufstechmittel und vorzugsweise auch in dem durch das zweite Aufstechmittel zu perforierenden Aufstechbereich höher liegt, vorzugsweise auf der Ebene des Flansches 5. Erneut kann der Barcode 8 auch hier wieder auf der Flanschunterseite vorgesehen sein.

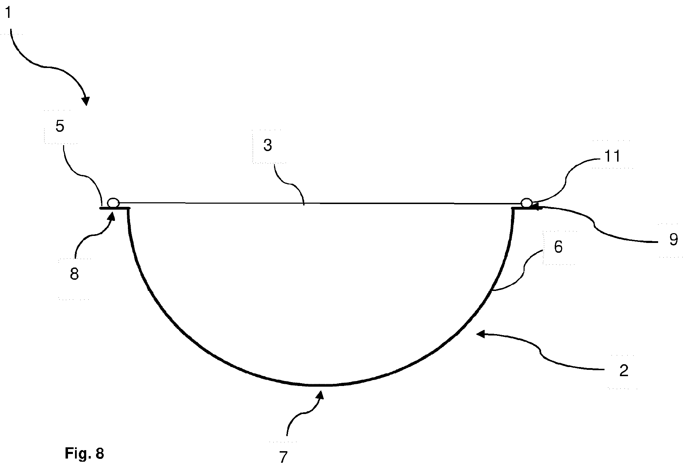

In **Figur 8** ist ein schematischer Querschnitt einer Portionskapsel 1 gemäß einer beispielhaften sechsten Ausführungsform der vorliegenden Erfindung dargestellt. Im Vergleich zu den zuvor erläuterten Ausführungsformen sieht diese einen anderen Befestigungsbereich 9 vor.

Vorliegend umfasst die Portionskapsel 1 ein Ringelement 11, d.h. ein vorzugsweise ringförmig umlaufendes Element, welches im Wesentlich auf der (in radialer Richtung) Höhe des Flansches 5 angeordnet ist. Dieses Ringelement 11 kann beispielsweise Teil des Deckelelements sein. Das Ringelement 11 kann ein- oder mehrstückig mit dem Deckelelement ausgebildet sein. Vorzugsweise ist es wenigstens teilweise aus dem gleichen Material ausgebildet.

Das Ringelement 11 kann eine Vielzahl von möglichen (radialen) Querschnitten aufweisen, bevorzugt sind jedoch ein rechteckiger, quadratischer, kreisrunder, elliptischer oder ovaler Querschnitt.

Hier ist beispielsweise innerhalb des Ringelements 11 eine Deckelfolie 3 gespannt. Es ist aber auch möglich, dass das Ringelement 11 einen geringeren Durchmesser als die Deckelfolie 3 bzw. das Deckelelement aufweist und darin eingesetzt ist.

Entscheidend ist nun, dass das Deckelelement über das Ringelement 11 mit dem Flansch 5 verbunden ist. D.h. das Ringelement 11 ist an dem Flansch 5 befestigt. Das Ringelement 5 ist dabei beispielsweise aus einem vergleichsweise weichen Material gefertigt, zumindest in dem Befestigungsbereich. Eine Befestigung des Deckelelements erfolgt damit nur indirekt an dem Flansch 5 und das Ringelement 11 ist insbesondere derart ausgebildet, dass eine Befestigung materialschonend erfolgt. Durch die Befestigung des Ringelements 11 mit dem Flansch 5 in dem Befestigungsbereich 9 wird der Flansch 5 also nicht oder zumindest in einem signifikant geringeren Maß beeinträchtigt. Der Barcode 8 kann also erneut auf der Flanschunterseite befestigt werden, da eine indirekte Befestigung über das Ringelement 11 erfolgt. Beispielsweise kann das Ringelement 11 derart ausgebildet sein, dass es eine Verformungsenergie absorbiert und dadurch strukturelle Schäden an dem Barcode 8 und/oder dem Flansch 5 vermieden werden.

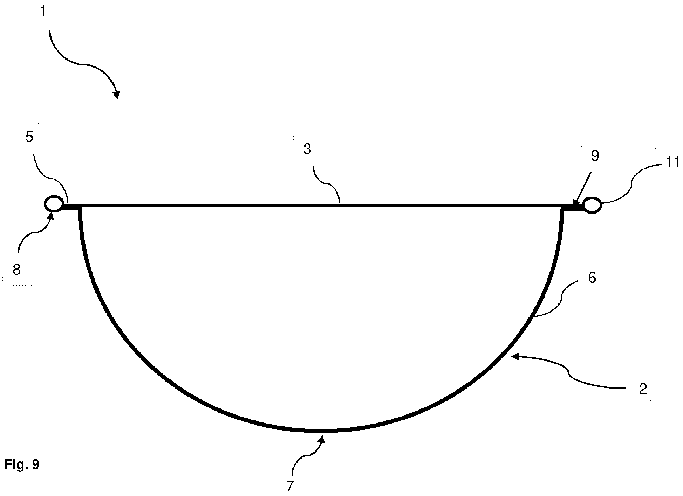

In **Figur 9** ist ein schematischer Querschnitt einer Portionskapsel 1 gemäß einer beispielhaften siebten Ausführungsform der vorliegenden Erfindung dargestellt, die der zuvor im Zusammenhang mit **Figur 8** erläuterten Ausführungsform ähnelt. Auch hier umfasst die Portionskapsel 1 ein Ringelement 11. Dieses Ringelement 11 weist nun aber einen Durchmesser auf, der größer ist als der Durchmesser des Flansches 5. Der Flansch 5 weist hier vorzugsweise auch einen kleineren Durchmesser auf als bei gattungsgemäßen Portionskapseln 1.

Der Barcode 8 ist gemäß dieser Ausführungsform auf dem Ringelement 11, insbesondere auf dessen Unterseite, vorgesehen. Eine Befestigung des Deckelelements, beispielsweise einer Deckelfolie 3, kann hier also am Flansch 5 erfolgen, wodurch der Befestigungsbereich 9 im Wesentlichen mit der Flanschoberseite zusammenfällt. Besonders bevorzugt ist die Deckelfolie 3 fest mit dem Ringelement 11 verbunden, insbesondere einstückig mit diesem ausgeführt. Ganz besonders bevorzugt weist das Ringelement 11 auf seiner Unterseite wenigstens in dem Bereich, in dem der Barcode 8 angeordnet ist, eine weitgehend horizontale Fläche auf.

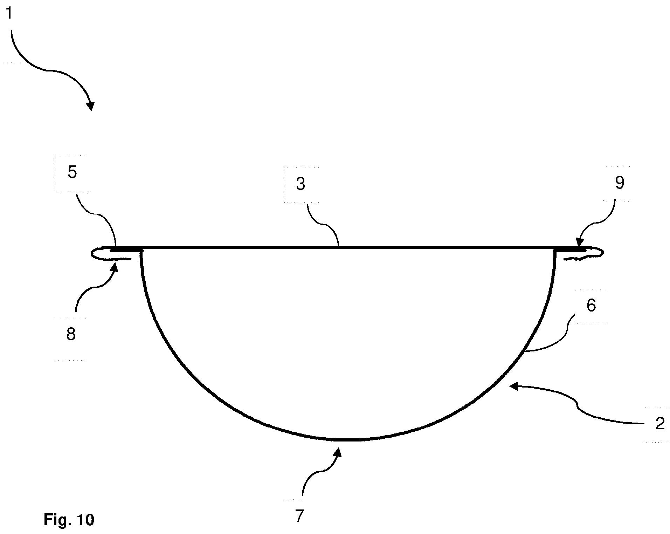

In **Figur 10** ist ein schematischer Querschnitt einer Portionskapsel 1 gemäß einer beispielhaften achten Ausführungsform der vorliegenden Erfindung dargestellt. Gemäß dieser Ausführungsform weist die Deckelfolie 3 einen deutlich größeren Durchmesser als der Flansch 5 auf. Die Deckelfolie 3 wird während der Herstellung der Portionskapsel nach dem Befüllen des Hohlraums mit dem Getränkerohmaterial auf den Flansch 5 aufgelegt um diesen umgeschlagen, so dass die Deckelfolie 3 auch auf der Unterseite des Flansches 5 aufliegt. Die Deckelfolie 3 kann nun auf der Unter- und/oder der Oberseite des Flansches 5 mit diesem verbunden werden. Vorzugsweise ist hier der Barcode 3 auf die Deckelfolie 3 derart aufgedruckt, dass der Barcode nach der Befestigung der Deckelfolie 3 auf der Flanschunterseite und in Richtung des Bodenbereichs 7 orientiert ist.

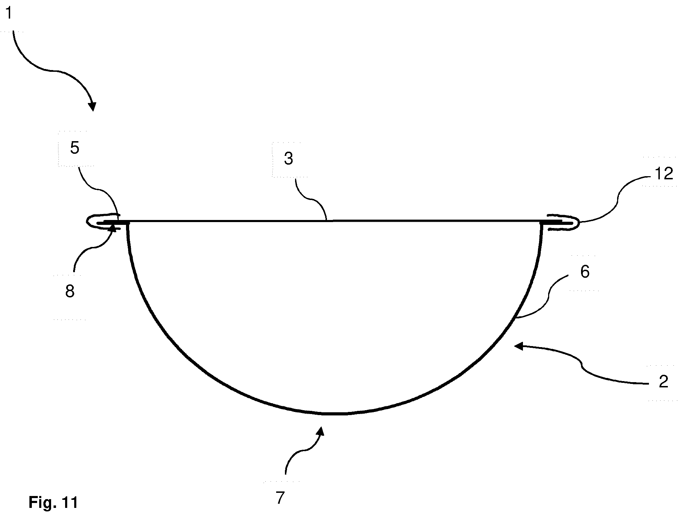

In **Figur 11** ist ein schematischer Querschnitt einer Portionskapsel 1 gemäß einer beispielhaften neunten Ausführungsform der vorliegenden Erfindung dargestellt. Hier umfasst die Portionskapsel 1 zusätzlich ein Einfassungselement 12. Dieses ist beispielsweise hüllenförmig vorgesehen, beispielsweise mit einem ungefähr U-förmigen Querschnitt, und wird von außen über den Flansch 5 gestülpt, so dass es auf der Unterseite den Flansch 5 wenigstens teilweise bedeckt und auf der Oberseite wenigstens bereichsweise die Deckelfolie 3 bedeckt. Das Einfassungselement wird nun derart fixiert, dass es Deckelfolie 3 und Flansch 5 in ihrer relativen Lage zueinander fixiert. Flansch 5 und Deckelfolie 3 werden folglich indirekt miteinander verbunden. Beispielsweise ist das Einfassungselement 12 als Schrumpffolienüberzug aus einer geeigneten Kunststofffolie vorgesehen. Nach dem Aufbringen wird das Einfassungselement 12 geschrumpft und haftet dadurch fest an Flansch 5 und Deckelfolie 3.

Das Einfassungselement 12 ist nun wenigstens auf der Flanschunterseite transparent ausgebildet, so dass der Detektor einen auf der Flanschunterseite vorgesehenen Barcode 8 durch das Einfassungselement 12 detektieren kann, und/oder der Barcode 8 ist auf der Unterseite des Einfassungselements 12 vorgesehen. Dadurch, dass Flansch 5 und Deckelfolie 3 nicht unmittelbar miteinander verbunden sind, droht auch keine Beschädigung des Flansches 5 bzw. des Barcodes 8, so dass der Barcode 8 auch gefahrlos auf der Flanschunterseite angeordnet werden kann.

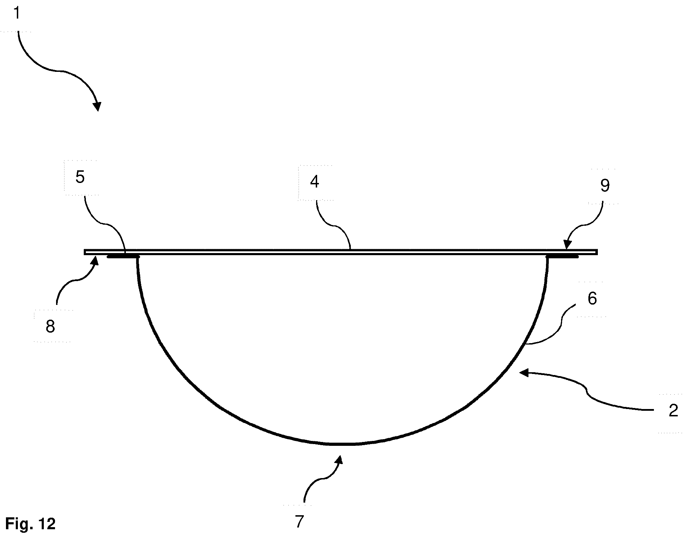

In **Figur 12** ist ein schematischer Querschnitt einer Portionskapsel 1 gemäß einer beispielhaften zehnten Ausführungsform der vorliegenden Erfindung dargestellt. Die Portionskapsel 1 dieser Ausführungsform weist keine Deckelfolie 3 im engeren Sinne, d.h. keine weitgehend flexible Folie, auf, sondern ein wenigstens teilweise und/oder wenigstens bereichsweise starres Deckelelement 4 auf. Das Deckelelement 4 ist dabei wenigstens in den Aufstechbereichen flexibel und/oder elastisch genug, dass eine fehlerfreie Funktion der Aufstechmittel gewährleistet ist, aber weist insbesondere im radial äußeren Bereich eine hinreichende Eigenstabilität auf, dass ein nicht auf dem Flansch 5 gelagerter Bereich des Deckelelements 4 eine im Wesentlichen horizontale Lage beibehält. Der Barcode 8 ist hier auf der Unterseite des Deckelelements 4, insbesondere in einem über den Flansch 5 hinausragenden Bereich, vorgesehen.

Eine Befestigung des Deckelelements 4 kann nun in gewohnter Weise an dem Flansch 5 erfolgen, da durch die Befestigung der radial außen liegende Barcode 8 nicht beeinträchtigt wird. Zudem ist es möglich, dass auf Grund des im Vergleich zu einer Folie relativ steifen Deckelelements andere Befestigungsverfahren Anwendung finden können. Beispielsweise ist das Deckelelement 4 an den Flansch 5 geklebt.

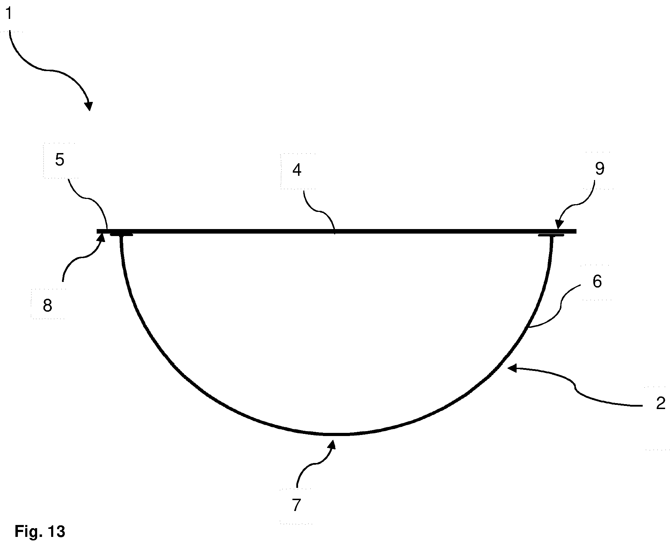

In **Figur 13** ist ein schematischer Querschnitt einer Portionskapsel 1 gemäß einer beispielhaften elften Ausführungsform der vorliegenden Erfindung dargestellt. Dabei entspricht diese Ausführungsform insbesondere weitgehend der zuvor erläuterten Ausführungsform, die in **Figur 12** dargestellt ist.

Auch hier ist ein wenigstens in einem radial äußeren Bereich weitgehend eigenstabiles oder steifes Deckelelement 4 vorgesehen. Nun umfasst der Flansch 5 jedoch nicht nur einen radial nach außen abstehenden Bereich, sondern auch einen radial nach innen abstehenden Bereich, d.h. einen in Richtung des Hohlraums weisenden Bereich. Dieser kann bei der Herstellung des Basiselements 2 erzeugt werden. Alternativ oder zusätzlich wird er durch Energieeinwirkung während des Befestigens des Deckelelements 4 an dem Flansch 5 erzeugt. Vorzugsweise weist der innere Flanschbereich eine andere Form und/oder eine andere radiale Erstreckung als der äußere Flanschbereich auf. Beispielsweise wird unter Druck- und/oder Wärmeeinwirkung das Material des Flansches derart aufgeweicht, dass ein Teil radial nach innen verdrängt wird.

Ein solchermaßen verbreiteter Flansch bietet vorteilhafterweise eine größere Befestigungsfläche und somit eine stabilere Befestigung des Deckelelements 3 an dem Flansch 5 und damit an dem Basiselement 2.

Besonders bevorzugt ist der Barcode 8 wieder an der Unterseite des Deckelelements 4 in einem über den Flansch 5 radial nach außen hinausragenden Bereich vorgesehen. Da im vorliegenden Fall der Flansch 5 erheblich verformt werden kann, ist es besonders vorteilhaft, wenn der Barcode 8 nicht an dem Flansch 5, sondern an dem Deckelelement 4 angeordnet ist.

### Bezugszeichenliste

- 1: Portionskapsel
- 2: Basiselement
- 3: Deckelfolie
- 4: starres Deckelelement
- 5: Flansch
- 6: Kapselwandung
- 7: Bodenbereich
- 8: Barcode
- 9: Befestigungsbereich
- 10: Stufe
- 11: Ringelement
- 12: Einfassungselement

- A: Zentralachse

## Patentansprüche

1. Portionskapsel (1) zur Zubereitung eines Getränks mit einer Getränkezubereitungsmaschine, wobei die Portionskapsel (1) ein Basiselement (2) mit einem Hohlraum zum Aufnehmen eines Getränkerohmaterials und ein den Hohlraum verschließendes Deckelelement (4) aufweist, wobei das Basiselement (2) einen Bodenbereich (7), einen umlaufenden Flansch (5) an dem dem Bodenbereich (7) gegenüberliegenden Ende und eine sich von dem Bodenbereich (7) zum umlaufenden Flansch (5) erstreckende Kapselwandung (6) umfasst, wobei die Portionskapsel (1) einen optisch detektierbaren Identifikationscode, insbesondere einen Bit- und/oder Barcode (8), aufweist, wobei das Deckelelement (4) an dem Flansch (5) befestigt ist, **dadurch gekennzeichnet, dass** der Bit- und/oder Barcode (8) auf der Unterseite des Deckelelements (4) in einem über den Flansch (5) hinausragenden Bereich vorgesehen ist und dass der Flansch (5) nicht nur einen radial nach außen abstehenden Bereich, sondern auch einen radial nach innen abstehenden Bereich, also einen in Richtung des Hohlraums weisenden Bereich, aufweist.

2. Portionskapsel (1) nach Anspruch 1, **dadurch gekennzeichnet, dass** ein radial äußerer Bereich eines als Deckelfolie ausgebildeten Deckelelements (4) eigenstabil ausgebildet ist.

3. Portionskapsel (1) nach einem der vorhergehenden Ansprüche, **dadurch gekennzeichnet, dass** das Deckelement (4) als wenigstens bereichsweise steifes Deckelelement (4) ausgebildet ist.

4. Portionskapsel (1) nach einem der vorhergehenden Ansprüche, **dadurch gekennzeichnet, dass** das Deckelement (5) an den Flansch (5) geklebt ist.

5. Portionskapsel (1) nach einem der vorhergehenden Ansprüche, **dadurch gekennzeichnet, dass** der innere Flanschbereich eine andere Form und/oder eine andere radiale Erstreckung als der äußere Flanschbereich aufweist.

6. Portionskapsel (1) nach einem der vorhergehenden Ansprüche, **dadurch gekennzeichnet, dass** die Portionskapsel (1) rotationssymmetrisch um eine mittig durch die Portionskapsel verlaufende Zentralachse (A) ausgebildet ist.

7. Portionskapsel (1) nach Anspruch 6, **dadurch gekennzeichnet, dass** sich die Kapselwandung (6) zwischen dem Bodenbereich (7) und dem Flansch (5) in radialer Richtung bezogen auf die Zentralachse (A) erstreckt, wobei die radiale Richtung senkrecht zu der Zentralachse (A) ausgerichtet ist.

8. Portionskapsel (1) nach einem der vorhergehenden Ansprüche, **dadurch gekennzeichnet, dass** das Basiselement (2) sphärisch ausgestaltet ist und insbesondere mittels Tiefziehen hergestellt ist.

9. Portionskapsel (1) nach einem der vorhergehenden Ansprüche, **dadurch gekennzeichnet, dass** das Basiselement (2) aus Aluminium (AI), Polyethylen (PE), Polypropylen (PP), Polyvinylchlorid (PVC), Polymethylmetacrylat (PMMA), Polycarbonat (PC), Polystyrol (PS), Polyphenylenether (PPO) und/oder Polyethylenterephthalat (PET), insbesondere ein- oder mehrlagig, gefertigt ist.
